# EUROPÄISCHE PATENTANMELDUNG

(11) **EP 1 813 347 A1**
(43) Veröffentlichungstag der Anmeldung: **01.08.2007**
(21) Anmeldenummer: 06127144.1
(22) Anmeldetag: 22.12.2006
(51) Int. Cl.: B01J 14/00, B01J 4/00, B01J 8/02, B01D 3/00, B01F 3/04

(54) **Verteiler zur paarweisen Abgabe zweier Flüssigkeiten auf eine Vielzahl von Einspeisestellen in einem Reaktor oder einer Kolonne**

(30) Priorität: 25.01.2006 EP 06405033
(71) Anmelder: Sulzer Chemtech AG, 8404 Winterthur (CH)
(72) Erfinder: Bachmann, Christian Gottlieb, 8548 Ellikon an der Thur (CH); Fehr, Emil, 8415 Berg am Irchel (CH)
(74) Vertreter: Sulzer Management AG

(57) **Zusammenfassung**

Der Verteiler dient zu einer paarweisen Abgabe zweier Flüssigkeiten auf eine Vielzahl von Einspeisestellen (9), die in einem Reaktor oder einer Kolonne auf einer horizontalen Querschnittsfläche liegen. Mit dem Verteiler (1) lassen sich an jeder Einspeisestelle die Flüssigkeiten getrennt zuführen. Die Einspeisestellen sind mit einer Dichte von mindestens 50 Stellen pro m² auf einer Mehrzahl von Linien angeordnet. Die genannte Querschnittsfläche ist längs dieser Linien jeweils durch ein Paar (10) von Nebenkanälen (11, 12) überspannt. Die Nebenkanäle sind an Hauptkanäle angeschlossen. Jedes Paar von Nebenkanälen bildet eine Einheit. Dieses Nebenkanalpaar (10) umfasst zwei durch Abkantung geformte Seitenteile (31, 32) sowie eine Trennwand (30). Auf den Seitenteilen erstrecken sich zwischen Kanalenden jeweils Böden (34, 34') der Nebenkanäle längs einer horizontalen Aussen- und Innenkante (4, 5), die auf einer horizontalen oder geneigten Ebene liegen. Die Seitenteile gehen bei den Innenkanten jeweils in einen Endstreifen (35, 35') über. Ein entsprechender unterer Endstreifen (36) der Trennwand ist zwischen den Endstreifen der Seitenwände angeordnet und mit diesen verbunden. Durchbrüche in den Böden oder bodennahen Zonen der Seitenteile bilden für die Flüssigkeiten Austrittsöffnungen (21, 22), die benachbart für die paarweise Abgabe der Flüssigkeiten in den Nebenkanälen angeordnet sind.

## Beschreibung

Die Erfindung betrifft einen Verteiler zur paarweisen Abgabe zweier Flüssigkeiten auf eine Vielzahl von Einspeisestellen in einem Reaktor oder einer Kolonne sowie einen Reaktor oder eine Kolonne mit einem solchen Verteiler.

Es gibt chemische Verfahren, bei denen zwei flüssige Reaktanden auf einer Trägerstruktur in Kontakt zu bringen sind. Zur Reduktion unerwünschter Nebenreaktionen müssen die beiden Flüssigkeiten getrennt an einer Vielzahl von relativ dicht angeordneten Einspeisestellen auf die Trägerstruktur auftreffen und dürfen sich erst auf dieser mischen. Die Trägerstruktur umfasst ein inertes oder katalytisch wirkendes Substrat, das insbesondere in einer Kolonne aus Packungselementen oder in einem Festbettreaktor aus einer Schüttung von Füllkörpern besteht. Auf dem Substrat finden die chemischen Reaktionen statt. Eine Querschnittsfläche des Reaktors oder der Kolonne bildet eine obere Begrenzung der Trägerstruktur. Auf dieser Querschnittsfläche befinden sich die Einspeisestellen. Die Trägerstruktur ist für die Reaktanden in vertikaler Richtung durchlässig. Sie kann mit vertikalen Teilräumen gekammert sein, in denen das Substrat enthalten ist und die jeweils einer Einspeisestelle zugeordnet sind. Die Einspeisestellen sind auf einer Mehrzahl von Linien, insbesondere parallelen Geraden angeordnet.

Bei anderen Verfahren müssen zwei nicht mischbare Flüssigkeiten gut verteilt in einem vorgegebenen Mengenverhältnis in eine Einrichtung zugeführt werden. Bei diesen Verfahren sind Verteiler notwendig, die eine getrennte Aufgabe der Flüssigkeiten beispielsweise in Rohrbündel von Mehrrohrreaktoren oder Fallfilmverdampfern erlauben.

Aufgabe der Erfindung ist es, einen Verteiler zu schaffen, der eine paarweise und getrennte Abgabe zweier Flüssigkeiten auf eine Vielzahl von Einspeisestellen bei einer Dichte von mindestens 50 Einspeisestellen pro m² ausführbar macht. Diese Aufgabe wird durch den im Anspruch 1 definierten Verteiler gelöst.

Der Verteiler dient zu einer paarweisen Abgabe zweier Flüssigkeiten auf eine Vielzahl von Einspeisestellen, die in einem Reaktor oder einer Kolonne auf einer horizontalen Querschnittsfläche liegen. Mit dem Verteiler lassen sich an jeder Einspeisestelle die Flüssigkeiten getrennt zuführen. Die Einspeisestellen sind mit einer Dichte von mindestens 50 Stellen pro m² auf einer Mehrzahl von Linien angeordnet. Die genannte Querschnittsfläche ist längs dieser Linien jeweils durch ein Paar von Nebenkanälen überspannt. Die Nebenkanäle sind an Hauptkanäle angeschlossen. Jedes Paar von Nebenkanälen bildet eine Einheit. Dieses Nebenkanalpaar umfasst zwei durch Abkantung geformte Seitenteile sowie eine Trennwand. Auf den Seitenteilen erstrecken sich zwischen Kanalenden jeweils Böden der Nebenkanäle längs einer horizontalen Aussen- und Innenkante, die auf einer horizontalen oder geneigten Ebene liegen. Die Seitenteile gehen bei den Innenkanten jeweils in einen Endstreifen über. Ein entsprechender unterer Endstreifen der Trennwand ist zwischen den Endstreifen der Seitenwände angeordnet und mit diesen verbunden. Durchbrüche in den Böden oder bodennahen Zonen der Seitenteile bilden für die Flüssigkeiten Austrittsöffnungen, die benachbart für die paarweise Abgabe der Flüssigkeiten in den Nebenkanälen angeordnet sind.

Die abhängigen Ansprüche 2 bis 8 betreffen vorteilhafte Ausführungsformen des erfindungsgemässen Verteilers. Ein Reaktor oder eine Kolonne mit einem solchen Verteiler ist Gegenstand der Ansprüche 9 und 10.

Nachfolgend wird die Erfindung anhand der Zeichnungen erläutert. Es zeigen:
- Fig. 1: einen Ausschnitt eines Nebenkanalpaars, das Teil eines erfindungsgemässen Verteilers ist,
- Fig. 2: eine Draufsicht auf zwei Nebenkanalpaare,
- Fig. 3: eine Draufsicht auf einen Ausschnitt eines erfindungsgemässen Verteilers,
- Fig. 4: eine Hälfte eines Nebenkanalpaars,
- Fig. 5: ein Detail zum Nebenkanalpaar der Fig. 4,
- Fig. 6: ein stabilisierendes Element für das Nebenkanalpaar,
- Fig. 7: eine besonders ausgeführte Randzone, die eine Trennwand des Nebenkanalpaars auf einem unteren Endstreifen aufweist,
- Fig. 8: einen Querschnitt durch zusammengefügte untere Endstreifen des Nebenkanalpaars und
- Fig. 9, 10: Querschnitte durch Nebenkanalpaare weiterer Ausführungsformen.

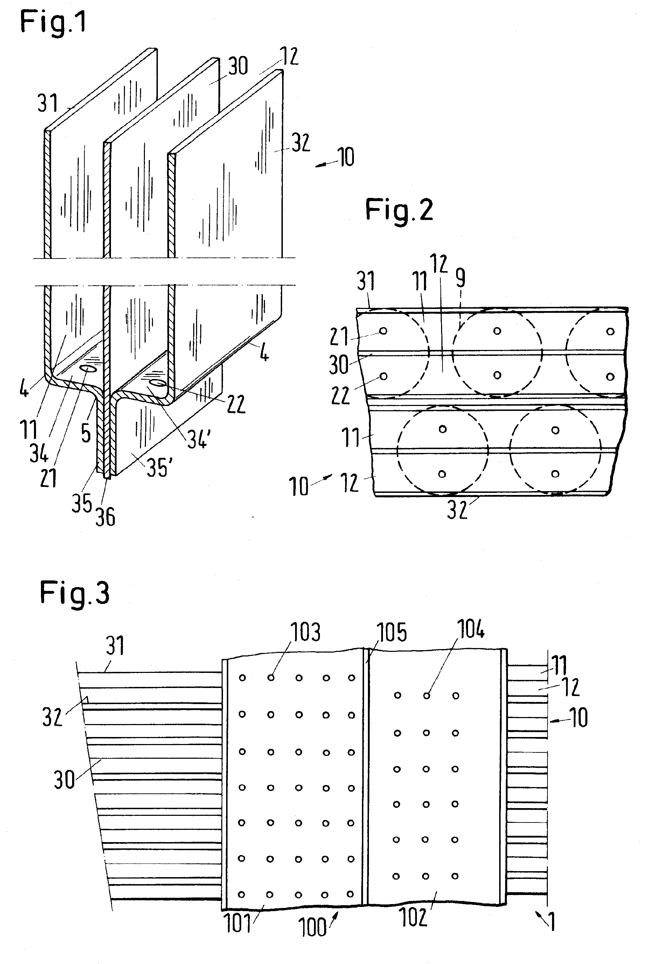

Ein erfindungsgemässer Verteiler 1, mit dem zwei Flüssigkeiten auf eine Vielzahl von Einspeisestellen abgegeben werden kann, ist in den Figuren 1 bis 4 dargestellt. Die Einspeisestellen, die in Fig. 2 als gestrichelt gezeichnete Kreise 9 angegeben sind, liegen in einem Reaktor oder einer Kolonne auf einer horizontalen Querschnittsfläche und haben eine relativ grosse Dichte von beispielsweise 50, 100, 300 oder mehr Stellen pro m². Die Einspeisestellen 9 sind auf einer Mehrzahl von parallelen Geraden angeordnet. An jeder Einspeisestelle 9 lassen sich die beiden Flüssigkeiten getrennt zuführen. Die genannte horizontale Querschnittsfläche ist längs Linien der geradlinig angeordneten Einspeisestellen 9 jeweils durch ein Paar 10 von Nebenkanälen 11, 12 überspannt, die an Hauptkanäle 101, 102 angeschlossen sind. Die Hauptkanäle 101, 102 bilden mit Vorteil ein Kanalpaar 100, in dem die Hauptkanäle 101, 102 durch eine gemeinsame Wand 105 getrennt sind. Durch Ablauflöcher 103 bzw. 104 erfolgt eine dosierte Verteilung der beiden Flüssigkeiten auf die Nebenkanäle 11, 12. Dabei sind die Löcher 103 den Nebenkanälen 11 und die Löcher 104 den Nebenkanälen 12 zugeordnet.

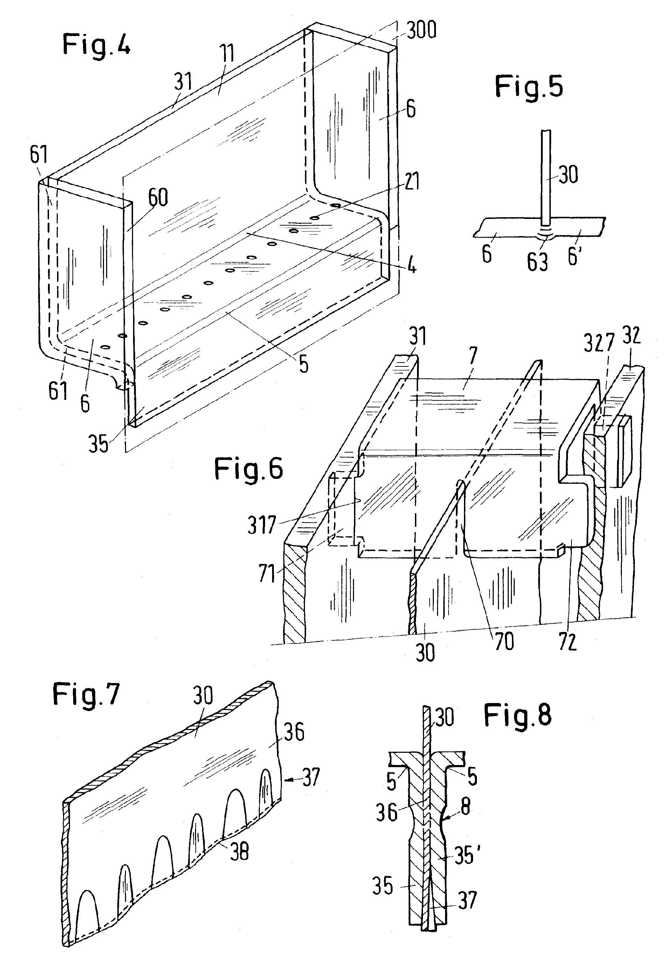

Jedes Paar 10 der Nebenkanäle 11, 12 bildet eine Einheit. Dieses Nebenkanalpaar 10 ist aus Wänden 6, die Kanalenden bilden (siehe Fig. 4), Seitenteilen 31 und 32, die durch Abkantung geformt sind, sowie eine Trennwand 30 zusammengesetzt. Auf den Seitenteilen 31, 32 erstrecken sich in longitudinaler Richtung zwischen den Kanalenden jeweils Böden 34, 34' der Nebenkanäle 11, 12 längs einer Aussenkante 4 und einer Innenkante 5, die horizontal ausgerichtet sind und auf einer Ebene liegen, die horizontal ist oder auch geneigt sein kann. Die Seitenteile 31, 32 gehen bei den Innenkanten 5 in longitudinale und nach unten gerichtete Endstreifen 35, 35' über. Ein entsprechender unterer Endstreifen 36 der Trennwand 30 ist zwischen den Endstreifen 35, 35' der Seitenwände 31, 32 angeordnet. Die drei Endstreifen 35, 36, 35' sind beispielsweise an einer Mehrzahl von Stellen (siehe Fig. 8) durch punktuelle Verbindungen 8 mit einander verbunden. Durchbrüche in den Böden 34, 34' der Seitenteile 31 und 32 bilden Austrittsöffnungen 21 bzw. 22 für die Flüssigkeiten, welche benachbart für die paarweise Abgabe der Flüssigkeiten in den Nebenkanälen 11, 12 angeordnet sind. Statt einzelner Durchbrüche pro Kanal können auch jeweils zwei Durchbrüche oder Gruppen von Durchbrüchen vorgesehen sein. Die Austrittsöffnungen 21, 22 können sich auch über den Böden 34, 34' in bodennahen Zonen der Seitenteile 31, 32 befinden. Es ist auch eine Konstruktion des Nebenkanalpaars 10 möglich, bei der die Endstreifen 35 und 35' vertikal in den Innenbereich des Nebenkanalpaars 10 oberhalb der Innenkante 5 gerichtet sind. Dabei werden die Endstreifen 35, 36, 35' mit Vorteil vor der Bildung der Biegekanten 4 und 5 mit einander verbunden, beispielsweise durch eine Rollnahtschweissung.

Die Verbindung zwischen den Endstreifen 35, 36, 35' durch die punktuellen Verbindungen 8 ist vorzugsweise durch Punktschweissung hergestellt; es sind aber auch Vernietungen, Clinch-Bildungen (d.h. mittels Clinch-Verfahren gebildete Verbindungen) und/oder Verschraubungen möglich. Statt der punktuellen Verbindungen 8 können auch zusammenhängende Verbindungen hergestellt sein, insbesondere jeweils in Form einer Schweissnaht, einer Rollnahtschweissung oder eines durch Verschmelzen gebildeten Streifens. Bei den punktuellen Verbindungen 8 können Spalten zwischen den unteren Endstreifen 35, 36, 35' der Seitenteile 31, 32 bzw. der Trennwand 30 toleriert werden, wenn im Betrieb des Verteilers 1 eine gesamte Leckage durch diese Spalten relativ klein ist, vorzugsweise nicht mehr als 1 Prozent der durch die Austrittsöffnungen 21, 22 abgegebenen Flüssigkeitsmengen beträgt. Damit eine Vermischung der durch die Spalten sickernden Flüssigkeiten nur in geringem Ausmass stattfindet, steht mit Vorteil der Endstreifen 36 der Trennwand 30 etwas über die Endstreifen 35, 35' der Seitenteile 31, 32 nach unten hinaus.

Das Nebenkanalpaar 10, von dem in Fig. 4 eine Hälfte gezeigt ist, kann - anders als dargestellt - höher und in longitudinaler Richtung wesentlich länger sein, nämlich im Maximum bis zu beispielsweise 3 oder 4 m. Die Nebenkanäle 11, 12 weisen beispielsweise eine Höhe auf, die 2 bis 20 Mal, vorzugsweise 4 bis 6 Mal grösser als die Breite des Nebenkanalpaars 10 ist. Diese Breite kann dank der erfindungsgemässen Konstruktion klein sein, nämlich bis zu einem Minimum von rund 30 mm. Dieser minimalen Breite entsprechend werden die Austrittsöffnungen 21 bzw. 22 in longitudinalen Abständen von rund 40 mm angeordnet. Haben die Trennwände 30 benachbarter Nebenkanalpaare 10 beispielsweise einen Abstand von 36.4 mm und beträgt der longitudinale Abstand zwischen den Austrittsöffnungen 42 mm, so ergibt sich für die Einspeisestellen 9 eine Dichte von 650 Stellen pro m² (bei der hexagonalen Anordnung der Einspeisestellen 9, wie sie für die in Fig. 2 dargestellten Ausführungsform vorliegt). Lücken zwischen benachbarten Nebenkanalpaaren 10 ermöglichen es, aus der Trägerstruktur je nach Prozess Dampf oder Gas im Gegenstrom nach oben entweichen zu lassen. Die Breite der Lücken wird hinsichtlich dem Prozess vorgegeben.

Die Wandstücke 6 an den Enden des Nebenkanals 11 sind in der Ausführungsform der Fig. 4 relativ dickwandig ausgeführt; dies ist aber nicht erforderlich. Eine Kantenfläche 60 des Wandstücks 6, die - in longitudinaler Richtung gesehen - sich in der Mitte des Nebenkanalpaars 10 befindet, liegt zusammen mit der Innenseite des Endstreifens 35 auf einer gemeinsamen Ebene 300 (mit einem strichpunktierten Rahmen dargestellt). Auf diese Ebene 300 kommt die Trennwand 30 zu liegen. Zusammen mit einem Wandstück 6' des in Fig. 4 fehlenden Nebenkanals 12 werden die Trennwand 30 und das Wandstück 6 mittels einer durchgehenden Schweissnaht 63 dicht verbunden: siehe Fig. 5. Eine entsprechende Schweissnaht ist längs einem Kontaktstreifen 61 zwischen dem Wandstück 6 und dem Seitenteil 31 vorgesehen. Gesamthaft sind sechs Schweissnähte pro Nebenkanalpaar 10 herzustellen. Der seitliche Kanalabschluss kann aber auch ähnlich wie das untere Ende des Kanalpaars 10 der Fig. 1 ausgebildet sein (nicht dargestellt), wobei zusätzlich noch eine horizontale Stossstelle zu verschweissen ist. Diese Stossstelle entspricht dem horizontalen Abschnitt des Kontaktstreifens 61 in Fig. 4.

Aufgrund der Abkantung mit den Kanten 4 und 5 und aufgrund von Wanddicken, die beispielsweise 1 mm betragen, bewirken die Seitenteile 31 und 32 eine mechanische Stabilität des Nebenkanalpaars 10 in dessen bodennahen Zone. Weitere Massnahmen zur Erhöhung der Stabilität können eine oder mehrere horizontale Verformungen wie Sicken in den Seitenteilen 31 und 32 oder eine Abkantung an deren oberen Rand sein. An den oberen Rändern der Seitenteile 31, 32 und der Trennwand 30 können auch stabilisierende Elemente 7 - siehe Fig. 6 - angeordnet sein, welche die Abstände zwischen den Rändern fixieren. Dieses Element 7 hat in der dargestellten Gestalt eine U-Form mit zwei Schenkeln und einem oberen, die Schenkel verbindenden Flächenstück. Die Schenkel sind in deren Ebenen durch zwei Laschen 71 und zwei Laschen 72 verlängert. Diesen Laschen 71, 72 entsprechen in den Seitenteilen 31, 32 vier Durchbrüche 317 bzw. 327, in welche die vier Laschen 71, 72 eingesteckt werden. Die Laschen 71, 72 und Durchbrüche 317, 327 können so ausgebildet sein, dass aufgrund einer Keilwirkung stabile, kraftschlüssige Verbindungen zwischen dem Element 7 und den Seitenteilen 31, 32 entstehen. Um eine Verbindung herzustellen, die ein Auseinanderweichen der Seitenteilen 31, 32 verhindert, können hakenartige Teile an den Rändern des oberen Flächenstücks des Elements 7 vorgesehen sein (nicht dargestellt), mit denen die oberen Kanten der Seitenteile 31 und 32 formschlüssig gehalten werden. Vertikale Schlitze 70 in den Schenkeln des Elements 7 nehmen den oberen Rand der Trennwand 30 auf.

Die Trennwand 30 kann wesentlich dünner als die Seitenteile 31, 32, insbesondere folienförmig sein. Der untere Endstreifen 36 der Trennwand 30 ist im einfachsten Fall glatt ausgebildet. Er kann auch eine Formgebung 37 aufweisen, wie sie in Fig. 7 illustriert ist. Wie der Querschnitt in Fig. 8 zeigt, befinden sich die punktuellen Verbindungsstellen 8 (insbesondere Punktschweissungen) oberhalb der Zone, auf der sich die Formgebung 37 befindet. Durch die Formgebung 37 wird eine lokalisierte Leckage und entsprechende Tropfenbildungen an der unteren Kante 38 der Trennwand 30 bewirkt. Dabei erscheinen die beiden Flüssigkeiten an alternierenden Stellen längs der Kante 38, wo sie abtropfen. Die untere Kante 38 der Trennwand 30 ist mit Vorteil aufgeraut oder weist eine feine Zahnung auf, die eine Bewegung von Tropfen längs der Kante 38 erschwert oder verhindert.

In Bezug auf ungleiche Eigenschaften der beiden Flüssigkeiten (beispielsweise verschiedene Viskositäten) können die Nebenkanalpaare 10 entsprechend asymmetrisch ausgebildet sein (beispielsweise verschieden grosse Austrittsöffnungen 21, 22 oder verschieden breite Kanäle). Auch im Fall, dass die zur Verteilung vorgesehenen Flüssigkeitsmengen ungleich sind, kann eine asymmetrische Konstruktion von Vorteil sein.

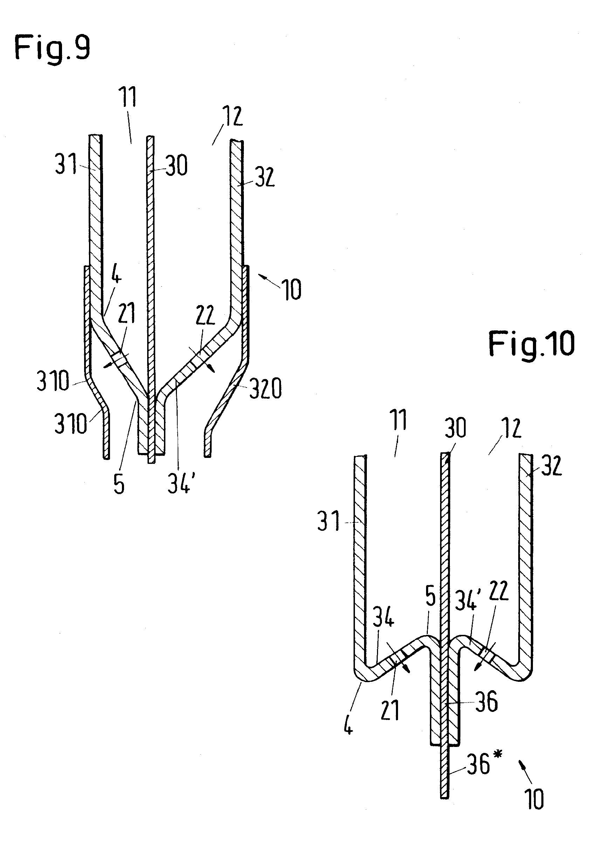

Die Figuren 9 und 10 zeigen Querschnitte von weiteren Ausführungsformen des Nebenkanalpaars 10. Bei diesen Beispielen sind die Ebenen zwischen der Aussenkante 4 und der Innenkante 5 geneigt. Im Fall der Fig. 9 strömt die Flüssigkeit mit gegen die Aussenkante 4 gerichteten Strahlen aus den Austrittsöffnungen 21 und 22 ab. Die Strahlen prallen auf schürzenartige Leitelemente 310 bzw. 320, über welche die Flüssigkeitsströme zu den Einspeisestellen 9 gelenkt werden. Das Nebenkanalpaar 10 ist asymmetrisch ausgebildet. Im Fall der Fig. 10 sind die Böden 34 und 34' der Nebenkanäle 11 bzw. 12 so geneigt, dass die Flüssigkeitsstrahlen gegen innen gerichtet sind. Die aufprallenden Flüssigkeiten werden auf einer Verlängerung 36* der Trennwand 30 getrennt zu den Einspeisestellen geleitet. Die Leitelemente 310, 320 oder 36* können eine horizontale Rillierung tragen, durch die sich eine verbesserte Querverteilung der Flüssigkeit ergibt. Die unteren Kanten der Leitelemente 310, 320 oder 36* können auch eine Zahnung aufweisen.

Statt den schürzenartigen oder ebenen Leitelementen 310, 320 oder 36* können auch rohrförmige vorgesehen sein. Mit rohrförmigen Leitelementen (nicht dargestellt), die jeweils mindestens einem Paar von Austrittsöffnungen 21, 22 zugeordnet sind, lässt sich die Abgabe der Flüssigkeiten gegen umgebende Einspeisestellen abschirmen.

Der erfindungsgemässe Verteiler 1 eignet sich für einen Reaktor oder eine Kolonne, worin chemische Reaktionen mit zwei getrennt zu zuführenden Flüssigkeiten stattfinden sollen oder zwei nicht mischbare Flüssigkeiten gleichmäßig und nach vorgegebenem Massenverhältnis einzuspeisen sind. Eine Trägerstruktur umfasst inertes oder katalytisch wirkendes Substrat, auf dem mit den beiden Flüssigkeiten als Reaktanden die chemische Reaktionen durchführbar sind. Die Trägerstruktur ist für die Reaktanden in vertikaler Richtung durchlässig. Eine Querschnittsfläche mit den Einspeisestellen 9 begrenzt die Trägerstruktur gegen oben. Das Substrat ist zumindest teilweise durch Oberflächen der Trägerstruktur gegeben; oder es ist festbettförmig und hat insbesondere die Form einer geordneten Packung oder einer Schüttung von Füllkörpern. Die Trägerstruktur kann eine durch vertikale Teilräume gebildete Kammerung aufweisen und beispielsweise in Form von Rohrbündeln vorliegen, wie sie von Mehrrohrreaktoren oder Fallfilmverdampfer bekannt sind. Jedem Teilraum ist mindestens eine Einspeisestelle zugeordnet. Der erfindungsgemässe Verteiler 1 eignet sich auch beispielsweise für eine Kolonne mit Fallfilmverdampferrohren, in denen nicht mischbare Flüssigkeiten zugeführt werden müssen.

## Patentansprüche

1. Verteiler zu einer paarweisen Abgabe zweier Flüssigkeiten auf eine Vielzahl von Einspeisestellen (9), die in einem Reaktor oder einer Kolonne auf einer horizontalen Querschnittsfläche liegen, mit welchem Verteiler (1) an jeder Einspeisestelle die Flüssigkeiten getrennt zuführbar sind, die Einspeisestellen mit einer Dichte von mindestens 50 Stellen pro m² auf einer Mehrzahl von Linien angeordnet sind, die genannte Querschnittsfläche längs dieser Linien jeweils durch ein Paar (10) von Nebenkanälen (11, 12) überspannt ist, diese Nebenkanäle an Hauptkanäle angeschlossen sind, jedes Paar von Nebenkanälen eine Einheit bildet und dieses Nebenkanalpaar (10) zwei durch Abkantung geformte Seitenteile (31, 32) sowie eine Trennwand (30) umfasst, wobei auf den Seitenteilen zwischen Kanalenden jeweils Böden (34, 34') der Nebenkanäle sich längs einer horizontalen Aussen- und Innenkante (4, 5) erstrecken, die auf einer horizontalen oder geneigten Ebene liegen, die Seitenteile bei den Innenkanten jeweils in einen Endstreifen (35, 35') übergehen, ein entsprechender unterer Endstreifen (36) der Trennwand zwischen den Endstreifen der Seitenwände angeordnet und mit diesen verbunden ist, und ferner Durchbrüche in den Böden oder bodennahen Zonen der Seitenteile Austrittsöffnungen (21, 22) für die Flüssigkeiten bilden, welche benachbart für die paarweise Abgabe der Flüssigkeiten in den Nebenkanälen angeordnet sind.

2. Verteiler nach Anspruch 1, **dadurch gekennzeichnet, dass** in Bezug auf ungleiche Eigenschaften der beiden Flüssigkeiten und/oder auf ungleiche, zur Verteilung vorgesehene Mengen die Nebenkanalpaare (10) entsprechend asymmetrisch ausgebildet sind.

3. Verteiler nach Anspruch 1 oder 2, **dadurch gekennzeichnet, dass** die Seitenteile (31, 32) aufgrund der Abkantung und Wanddicke eine mechanische Stabilität des Nebenkanalpaars (10) in dessen bodennahen Zone bewirken und dass an oberen Rändern der Seitenteile (31, 32) und der Trennwand (30) stabilisierende Elemente (7) angeordnet sind, welche die Abstände zwischen den Ränder fixieren.

4. Verteiler nach einem der Ansprüche 1 bis 3, **dadurch gekennzeichnet, dass** der untere Endstreifen (36) der Trennwand (30), die eine Folie sein kann, glatt ist oder eine Formgebung (37) aufweist, die lokalisierte Leckagen und entsprechende Tropfenbildungen an der unteren Kante (38) der Trennwand bewirkt, so dass die beiden Flüssigkeiten an alternierenden Stellen erscheinen und abtropfen.

5. Verteiler nach einem der Ansprüche 1 bis 4, **dadurch gekennzeichnet, dass** die untere Kante der Trennwand mit Vorteil aufgeraut ist oder eine feine Zahnung aufweist, die eine Bewegung von Tropfen längs der Kante erschwert oder verhindert.

6. Verteiler nach einem der Ansprüche 1 bis 5, **dadurch gekennzeichnet, dass** die unteren Endstreifen (35, 36, 35') der Seitenwände (31, 32) und der Trennwand (30) an einer Mehrzahl von Stellen durch punktuelle Verbindungen 8 mit einander verbunden sind, nämlich durch Punktschweissungen, Vernietungen, Clinch-Bildungen und/oder Verschraubungen, oder dass die Verbindung der Endstreifen durchgehend ist, insbesondere in Form einer Schweissnaht, einer Rollnahtschweissung oder eines durch Verschmelzen gebildeten Streifens.

7. Verteiler nach einem der Ansprüche 1 bis 6, **dadurch gekennzeichnet, dass** durch rohrförmige, schürzenartige oder ebene Leitelemente (310, 320, 36*) ein Transport der Flüssigkeiten zwischen den Austrittsöffnungen (21, 22) und den Einspeisestellen (9) abschirm- und/oder lenkbar ist.

8. Verteiler nach Anspruch 7, **dadurch gekennzeichnet, dass** das Leitelement (310, 320, 36*) eine horizontale Rillierung zu einer verbesserten Querverteilung der Flüssigkeiten und/oder eine Zahnung an der unteren Kante aufweist.

9. Reaktor oder Kolonne mit einem Verteiler (1) gemäss einem der Ansprüche 1 bis 8, **dadurch gekennzeichnet, dass** eine Querschnittsfläche mit Einspeisestellen (9) für zwei Flüssigkeiten eine Trägerstruktur gegen oben begrenzt, dass diese Trägerstruktur inertes oder katalytisch wirkendes Substrat umfasst, auf dem mit den beiden Flüssigkeiten als Reaktanden chemische Reaktionen durchgeführt werden können, dass das Substrat zumindest teilweise durch Oberflächen der Trägerstruktur gegeben ist, oder dass es festbettförmig ist, insbesondere die Form einer geordneten Packung oder einer Schüttung von Füllkörpern hat, oder dass die Trägerstruktur in Form von Rohrbündeln vorliegt, wie sie von Mehrrohrreaktoren oder Fallfilmverdampfer bekannt sind, und dass die Trägerstruktur für die Flüssigkeiten in vertikaler Richtung durchlässig ist.

10. Reaktor oder Kolonne nach Anspruch 9, **dadurch gekennzeichnet, dass** die Trägerstruktur eine durch vertikale Teilräume gebildete Kammerung aufweist, wobei jedem Teilraum mindestens eine Einspeisestelle zugeordnet ist, und dass insbesondere die Teilräume Rohre eines Mehrrohrreaktors oder eines Fallfilmverdampfers sind.
